# EUROPÄISCHE PATENTSCHRIFT

(11) **EP 1 519 152 B1**
(45) Veröffentlichungstag und Bekanntmachung des Hinweises auf die Patenterteilung: **03.11.2010**
(21) Anmeldenummer: 04020752.4
(22) Anmeldetag: 01.09.2004
(51) Int. Cl.: G01C 21/36

(54) **Vorrichtung und Verfahren zur Darstellung von Fahrhinweisen**
Device and method for displaying driving instructions
Dispositif et procédé pour représenter des instructions de conduite

(30) Priorität: 24.09.2003 DE 10344120
(43) Veröffentlichungstag der Anmeldung: 30.03.2005
(73) Patentinhaber: Daimler AG, 70327 Stuttgart (DE)
(72) Erfinder: Herrtwich, Ralf-Guido, 14532 Kleinmachnow (DE); Maile, Michael, Half Moon Bay, CA 94019 (US); Bock, Thomas, Palo Alto, CA 94301 (US); Wilke, Wilhelm, 89160 Dornstadt (DE); Holfelder, Wieland, Sunnyvale, CA 94087 (US)
(74) Vertreter: JENSEN & SON

(56) Entgegenhaltungen:
- EP-A- 0 840 094
- EP-A- 1 283 406
- WO-A-03/005102
- DE-A- 10 138 719

## Beschreibung

Die Erfindung betrifft eine Vorrichtung und ein Verfahren zur Darstellung von Fahrhinweisen zur Fahrzeugnavigation in einem Bild der Fahrzeugumgebung.

Aus der DE 101 38 719 A1 ist ein Verfahren und eine Vorrichtung zur Darstellung von Fahrhinweisen im Fahrzeug bekannt, welches die von einem Navigationssystem ermittelten Fahrhinweise auf die Windschutzscheibe projiziert oder in ein von einer Video-Kamera aufgenommenes Bild der Umgebung einblendet, welches auf dem Display des Navigationssystems gezeigt wird. Die Fahrhinweise werden in Form von virtuellen Linienzügen oder Pfeilen, die aus Sicht des Fahrers bzw. der Kamera den einzuschlagenden Weg auf der Windschutzscheibe oder auf dem Display in Übereinstimmung mit der vor dem Fahrzeug liegenden Straße markieren, dargestellt. Die Ausrichtung der angezeigten Navigationshinweise im Bild der Fahrzeugumgebung wird dabei gemäß der satellitengestützten Positionsermittlung des Navigationssystems vorgenommen. Damit die Anzeige von Abzweigungen auch bei Bergauf- und Bergabfahrt aus Sicht des Fahrers bzw. der Kamera korrekt liegen, wird aus den GPS-Positionsdaten des Fahrzeugs - ggf. unterstützt durch Koppelnavigation - und der Lage des Fahrzeugs mit Hilfe eines 3D-Geländemodells eine entsprechende Verkürzung bzw. Verlängerung der Linien berechnet.

Eine Positionsbestimmung für das Fahrzeug mit Hilfe eines satellitengestützten Systems liefert wegen unvermeidlicher Fehler Positionsangaben mit unterschiedlicher Abweichung von der realen Position des Fahrzeugs. Solche Abweichungen können durch Koppelnavigation zwar verringert werden, aber bei größeren Fehlern bezüglich der Positionsbestimmung - beispielsweise durch Reflexionen oder in Bereichen, in denen der Empfang der Satellitensignale gestört ist -, sind größere Abweichungen nicht vermeidbar, so dass umgebungsbezogene Fahrhinweise nicht genügend genau mit der Umgebung in Übereinstimmung gebracht werden können. D.h., die dem Fahrer auf der Projektionsfläche angezeigte virtuell markierte Straßenführung erscheint beispielsweise neben die eigentliche Fahrbahn versetzt; unter Umständen wird dabei sogar die Fahrbahn mit dem entgegenkommenden Verkehr markiert, oder das Bild springt hin und her. Das ist für den Fahrer zwangsläufig irritierend und lenkt dessen Aufmerksamkeit vom eigentlichen Verkehrsgeschehen ab.

Werden Navigationshinweise in einem Bild der Fahrzeugumgebung (das kann ein Videobild auf einem Display sein oder ein Head-Up-Display in Verbindung mit der Windschutzscheibe) beispielsweise in Form von Linien oder Pfeilen dargestellt, die sich am Straßenverlauf ausrichten, oder als Markierungen, die sich auf markante Punkte der Fahrzeugumgebung beziehen, dargestellt, ist es wichtig, dass diese Hinweise mit möglichst kontinuierlicher Präzision in das Bild der Fahrzeugumgebung eingepasst werden.

Kann eine präzise Einpassung der Fahrhinweise in das Bild der Fahrumgebung wegen fehlerbehafteter Positionsangaben nicht gewährleistet werden, verrutscht die Darstellung von Fahrhinweisen im Bild gegenüber dem tatsächlich zu markierenden Bereich, wodurch die zur Orientierung gedachten Hinweise für den Fahrer nicht mehr ohne Weiteres interpretierbar sind. Abgesehen davon, dass es für den Fahrer lästig und ablenkend ist, wenn die Darstellung der Navigationshinweise gegenüber der Soll-Lage in Abhängigkeit von der Genauigkeit der Positionsbestimmung "springt", stiften inkorrekt platzierte Fahrhinweise sogar Verwirrung, wenn beispielsweise ein Abbiegehinweis im Bild der Umgebung zwischen einer näher und einer entfernter gelegenen Seitenstraße hin und her springt.

Das Problem einer vom eigentlichen Objekt abweichenden Markierung kann beispielsweise durch ein Mustererkennungssystem, das für die Erkennung verschiedenster Objekte, darunter auch Straßen, ausgelegt ist, gelöst werden.

Die WO 03 005 102 A1 beschreibt ein Head-Up Display System und ein Verfahren für eine - in Bezug auf die Sicht eines Fahrzeuginsassen ortskorrekten - Markierung von Objekten in der Fahrzeugumgebung. Die ortskorrekte oder ortsbezogene Darstellung aus der Sicht eines Fahrzeuginsassen erfolgt bezogen auf dessen durch Sensoren festgestellte Kopf- oder Augenposition. Die zu markierenden Objekte betreffen im Wesentlichen andere Verkehrsteilnehmer oder Verkehrszeichen. Die zu markierenden Objekte der Fahrzeugumgebung werden dabei mittels Kameras und Mustererkennung identifiziert und für die Markierung auf der Windschutzscheibe geeignet modelliert. Es ist auch an eine visuelle Umsetzung von Navigationsdaten gedacht, wobei dann die zu befahrende Fahrbahn bzw. eine Abzweigung für die Fahrersicht auf dem Head-Up-Display markiert wird.

Allein mit Mitteln der Mustererkennung ist eine Abzweigung a-ber - sei es wegen vorausfahrender Fahrzeuge oder anderer, das Sichtfeld behindernder Objekte in vielen Fällen gar nicht zweifelsfrei identifizierbar, so dass die virtuelle Markierung der Abzweigung in diesen Fällen, mit den oben beschriebenen Nachteilen, wiederum von den - fehlerbehafteten - Positionsangaben des Navigationssystems abhängig ist.

Aufgabe der Erfindung ist es, eine Vorrichtung und ein Verfahren mit einer stets zuverlässig interpretierbaren Darstellung von Navigationshinweisen in einem Bild der Fahrumgebung zu schaffen.

Die Aufgabe wird durch die Merkmale der unabhängigen Ansprüche 1 und 9 gelöst. Vorteilhafte Ausgestaltungen ergeben sich durch die abhängigen Ansprüche.

Das erfindungsgemäße Verfahren macht die Darstellung der vom Navigationssystem ermittelten Navigationshinweise von der Zuverlässigkeit der von einem satellitengestützen System ermittelten Positionsangabe für das Fahrzeug abhängig. Durch die Berücksichtigung der Zuverlässigkeit oder Genauigkeit der Positionsangaben kann die Darstellung der Navigationshinweise immer in einer für den Fahrer bestmöglich erfassbaren Form gewährleistet werden. Die erfindungsgemäße Bilderzeugungseinheit erzeugt den vom Navigationssystem ermittelten Navigationshinweis also stets in einer Darstellungsform, die gemäß der für die Positionsangabe erreichbaren Zuverlässigkeit für den Fahrer am besten erfassbar ist und die geringste Ablenkung mit sich bringt.

Ein Navigations- oder Fahrhinweis kann von der Bilderzeugungseinheit bei hochgenauen Positionsangaben beispielsweise für den Fahrer komfortabel als virtuelle, dem Straßenverlauf folgende Linienführung erzeugt und präzise in ein Bild der Fahrzeugumgebung auf einer Projektionsfläche im Fahrzeug eingeblendet werden. Ist die Zuverlässigkeit der Positionsangaben für eine zufriedenstellende Darstellung von Fahrhinweisen mit direktem Bezug zur Umgebung jedoch zu gering, schaltet die Bilderzeugungseinheit auf andere Darstellungsformen um, beispielsweise auf schematische Pfeile oder virtuelle Verkehrszeichen, von denen der Fahrer nicht erwartet, dass sie sich optisch an die sich verändernde Umgebung anpassen. Schematisch oder abstrakt dargestellte Navigationshinweise werden auf einem festen Platz auf der Projektionsfläche angezeigt oder ein Bezug des Fahrhinweises zur Umgebung wird stark gedämpft nachgeführt. Die bei abstrakteren Darstellungsformen gegenüber Darstellungen mit Umgebungsbezug eingebüßte Aussagekraft des dargestellten Hinweises kann beispielsweise durch unterstützende akustische Hinweise ausgeglichen werden.

Die Bestimmung der Zuverlässigkeit für die durch das satellitengestützte System ermittelte Positionsangabe erfolgt vorteilhaft durch eine Erfassung und Auswertung der statistischen Werte, welche satellitengestützte Systeme üblicherweise zur Genauigkeit der ermittelten Position mit angeben. Diese Werte werden vom Navigationssystem bei der Positionsbestimmung mit empfangen, und von diesem an die Einrichtung zur Bestimmung der Zuverlässigkeit weitergegeben. Die Zuverlässigkeit selbst kann als statistisches Maß in verschiedenen Größen, beispielsweise als Standardabweichung oder eine Fehlerwahrscheinlichkeit ausgedrückt werden.

Die Positionsangabe wird vorteilhaft durch Korrekturdaten einer Bodenstation präzisiert, wobei auch die Zuverlässigkeit mit Werten für die Zuverlässigkeit dieser Präzisierung korrigiert wird. Dabei erhält die Einrichtung zur Ermittlung der Positionsangabe die Daten zur Korrektur der Position durch das Navigationssystem, welches diese Daten und auch die Daten zur Zuverlässigkeit dieser Positionskorrektur von der Bodenstation empfängt, und die Daten zur Korrektur der Zuverlässigkeit an die Einrichtung zur Bestimmung der Zuverlässigkeit übermittelt. In die Korrektur der Zuverlässigkeitsbestimmung kann dabei auch der Korrekturbetrag, um den die Positionsangabe verbessert wurde, eingehen. Diesen Differenzbetrag erhält das Navigationssystem von der Einrichtung zur Ermittlung der Positionsangabe.

Durch Positionskorrekturen, wie sie für satellitengestützte Navigationssysteme durch Empfang von Signalen von fest vermessenen Bodenstationen, beispielsweise durch differentielles GPS möglich sind, kann die Genauigkeit der Positionsangaben vorteilhaft um mehrere Meter verbessert werden. Dies hilft in Bereichen, in denen der Empfang solcher Stationen möglich ist, die Position eines Fahrzeugs mit einer hohen Zuverlässigkeit zu bestimmen. In solchen Bereichen kann das erfindungsgemäße System objektbezogene Navigationshinweise auf der Projektionsfläche in ausreichender Übereinstimmung mit den Objekten der Fahrzeugumgebung darstellen. Die Positionsangaben für das Fahrzeug können noch weiter verbessert werden, indem die ermittelte Position mit einer digitalen Karte abgeglichen wird (Lane-Matching). Auch ein solcher Positionsabgleich führt wiederum zu einer erhöhten Zuverlässigkeit für die Positionsangabe, wobei die Verbesserung umso größer wird, je genauer die digitale Karte ist.

Es ist weiterhin von Vorteil, wenn die Positionsangabe durch fahrzeugseitig erhobene Signale präzisiert wird, wobei die Zuverlässigkeit entsprechend mit Werten für die Zuverlässigkeit dieser Präzisierungen korrigiert wird. Dazu sind die fahrzeugseitigen Sensoren mit der Einrichtung zur Ermittlung der Positionsangabe verbunden, die von den Sensoren die Daten zur Korrektur der Positionsangabe empfängt. Die Einrichtung zur Bestimmung der Zuverlässigkeit empfängt von den Fahrzeug-Sensoren Daten zur entsprechenden Korrektur der Zuverlässigkeit. Diese Daten betreffen die Zuverlässigkeit der Sensoren bzw. ihrer Messungen.

Der Vorteil von Positionskorrekturen mit Hilfe fahrzeugseitiger Sensoren besteht vor allem darin, dass hiermit ein gestörter Empfang der für die Positionsbestimmung notwendigen Satelliten-Signale überbrückt oder ausgeglichen werden kann. In Städten können die Satelliten-Signale durch hohe und dichte Bebauung reflektiert oder in Wäldern durch dichtes Blattwerk stellenweise verschattet werden, so dass die Position für eine Darstellung von Fahrhinweisen, die mit Bezug zur realen Umgebung dargestellt werden sollen, nicht mehr ausreichend genau bestimmt werden kann. Bei einem Empfang von weniger als 4 Satelliten oder durch Mehrwege-Effekte ergeben sich größere Differenzen zwischen der tatsächlichen und der berechneten Position eines Fahrzeugs. Mehrwege-Effekte können beispielsweise auch durch eine zweite Antenne zum Empfang von Satelliten-Positionsdaten am Fahrzeug, mit möglichst großer Entfernung zur ersten Antenne, durch Differenzberechnungen korrigiert werden.

Vorteilhafte Methoden zur Ergänzung und Korrektur der absoluten Positionsdaten, wie sie vom satellitengestützten System oder von einer Bodenstation empfangen werden, mit relativen Positionsangaben sind Odometrie und Koppelnavigation, die mit Angaben zu Lenkwinkel und Radumdrehung bzw. Beschleunigung o-perieren. Diese Signale werden von einem Lenkwinkelsensor und Radumdrehungssensoren und/oder von einem Inertialsensor erzeugt. Auch Informationen von der Anti-Schlupf-Regelung oder vom Anti-Blockiersystem sind zur genaueren Auswertung der Radumdrehung nutzbar. Signale für die relative Höhenänderung liefert ein Barometer.

Eine besonders vorteilhafte Möglichkeit zur relativen Präzisierung der Positionsangabe besteht im Einsatz einer videogestützten Fahrspurerkennung, deren Resultat eine Korrektur der Positionsangabe in lateraler Richtung erlaubt. Mit Nachtsichtgeräten ist dies auch nachts zuverlässig möglich. Eine Präzisierung der Positionsangaben in lateraler Richtung ist gerade für eine Darstellung von Navigationshinweisen als virtuelle Fahrbahnmarkierungen von besonderer Bedeutung, damit die virtuelle Markierung nicht versehentlich eine benachbarte Fahrbahn oder gar die Gegenfahrbahn anzeigt.

Zu den Daten, die diese Sensoren zur Positionskorrektur liefern, sind Daten zur Zuverlässigkeit der Messungen bestimmbar. Das können beispielsweise Herstellerangaben zu den Sensoren sein, zeit- oder entfernungsabhängig gewichtete Größen oder - im Fall des videogestützten Erkennungssystems - Werte für die Erkennungssicherheit.

Unter Ausnutzung der erwähnten Mittel können so präzise Positionsangaben erreicht werden, dass in Bereichen, in denen beispielsweise mindestens 7 Satelliten empfangen werden können, virtuelle Fahrbahnmarkierungen über längere Strecken angezeigt werden können. Bei dieser Darstellungsweise können mit der virtuellen Markierung der Fahrbahn auch Geschwindigkeitsangaben bzw. einzuleitende Bremsvorgänge, beispielsweise vor Kurven, angezeigt werden, indem die Markierung für bestimmte Geschwindigkeitsbereiche unterschiedlich gefärbt ist, oder indem neben der Markierung explizite Geschwindigkeitsangaben angezeigt werden.

Aber trotz der zusätzlicher Backup-Methoden, wie sie soeben beschrieben wurden, kann die Fahrzeugposition nur begrenzte Zeit mit ausreichender Zuverlässigkeit verfolgt werden. Mit zunehmender Entfernung vom letzten absolut bzw. satellitengestützt erfassten Messpunkt wächst auch bei diesen relativen Methoden der Fehler. Sind auf Dauer nicht ausreichend viele Satelliten für eine zuverlässige Positionsbestimmung erreichbar oder stören Mehrwege-Effekte die Positionsbestimmung und ist auch keine Bodenstation für den Empfang von Korrekturdaten erreichbar sinkt die Zuverlässigkeit der Positionsbestimmung, so dass von der Bilderzeugungseinrichtung für die Darstellung der virtuellen Fahrhinweise kein sicherer Umgebungsbezug herstellbar ist.

Daher ist es vorteilhaft, die zuverlässigkeitsabhängige Darstellung der Navigationshinweise gemäß drei Zuverlässigkeitsstufen vorzunehmen. Die erfindungsgemäße Bilderzeugungseinheit erzeugt die Navigationshinweise demnach bei einer hohen Zuverlässigkeit in einer umgebungsbezogen Darstellung, bei einer geringen Zuverlässigkeit in einer symbolischen Darstellung und bei einer mittleren Zuverlässigkeit - abhängig vom darzustellenden Navigationshinweis - entweder in umgebungsbezogener oder symbolischer Darstellung.

Eine dreistufige Unterscheidung von Darstellungsformen für Navigationshinweise trägt der Erfordernis einer für den Fahrer ablenkungsfreien Präsentation der Navigationshinweise ausreichend Rechnung. Kann ein ausreichend genauer Umgebungsbezug nicht hergestellt werden, weil die Positionsabweichungen in lateraler Richtung beispielsweise auf Dauer größer als ein halber oder als ein Meter werden, erfolgt die Darstellung der Fahrhinweise symbolisch, beispielsweise im Fall einer Abzweigung als ein abknickender Pfeil, der seine Lage auf der Projektionsfläche nicht verändert, aber ggf. mit der Annäherung an den Navigationspunkt wächst. Anstatt schematisierter Pfeile können hierbei auch virtuelle Wegweiser oder Verkehrszeichen dargestellt werden.

Wenn die Genauigkeit für die Positionsbestimmung in einem mittleren Bereich - beispielsweise in einem Bereich zwischen einem und fünf Metern liegt -, kann diese symbolische Darstellung auf der Projektionsfläche unter Zugrundelegung stark gedämpfter Positionsangaben langsam an den Navigationspunkt angenähert werden.

In longitudinaler Richtung kann man die Anforderungen an die Zuverlässigkeit oder Genauigkeit der Positionsbestimmung anders als in lateraler Richtung einteilen. Beispielsweise kann in Längsrichtung ein Bereich bis zu 3 oder 4 Metern als hoch zuverlässig, und ein Bereich zwischen 4 und 12 Metern als mittel zuverlässig gewertet werden. Die Zuverlässigkeit von Höhenangaben ist im Wesentlichen nur dann von Interesse, wenn ausreichend genaue Karten auch für Höhenangaben vorliegen. Ansonsten braucht die vertikale Dimension nicht ausgewertet zu werden, oder es genügt eine relative grobe Einteilung für gelegentliche Abgleiche.

Die Umschaltung zwischen den unterschiedlichen Darstellungsformen erfolgt jeweils erst dann, wenn die Zuverlässigkeit für einen gewissen Zeitraum in dem entsprechenden Zuverlässigkeitsbereich liegt. Der Zeitraum für Einhaltung einer hohen Zuverlässigkeit zur Umschaltung in die umgebungsbezogene Darstellung ist dabei sicherheitshalber länger zu wählen, als der Zeitraum für eine mittlere oder geringe Zuverlässigkeit zur Umschaltung in eine symbolische Darstellungsform der Navigationshinweise.

Für die umgebungsbezogene Darstellung werden die Navigationshinweise vorteilhaft lagerichtig zur Sicht des Fahrers oder zum Blickwinkel einer Kamera auf geeignete Objekte im Bild der Fahrzeugumgebung projiziert.

Die Projektionsfläche ist kann dabei entweder
- ein Display sein, auf dem das durch eine Kamera aufgenommene Bild der Fahrzeugumgebung wiedergegeben wird, in welches die durch die Bilderzeugungseinheit erzeugten Darstellungen der Navigationshinweise eingeblendet werden, oder
- eine halbdurchlässige Datenbrille oder
- die Windschutzscheibe in Verbindung mit einem Head-Up-Display sein, in welche die durch die Bilderzeugungseinheit erzeugten Navigationshinweise einblendbar sind.

Die lagerichtige Darstellung der umgebungsbezogenen Navigationshinweise wird dabei im Falle der Kombination von Display und Kamera vorteilhaft durch Bestimmung der relativen Lage der Kamera zur Umgebung mittels des vorhandenen Inertialsensors gewährleistet. Mit der Information über die bekannte Position der Kamera zusammen mit der Lageinformation des Inertialsensors und der zum Navigationshinweis gehörenden Karteninformation (elektronischer Horizont) kann die Bilderzeugungseinheit den richtigen Ort für eine virtuelle Markierung von Objekten der Fahrzeugumgebung, die für die Navigationshinweise markiert werden sollen, bestimmen und auf der Projektionsfläche lagerichtig in das Bild projizieren.

Eine lagerichtige Darstellung der umgebungsbezogenen Navigationshinweise mittels eines Head-Up-Display oder mittels einer halbdurchlässigen Datenbrille wird vorteilhaft entsprechend den zum Display gemachten Ausführungen durch Bestimmung von Position und Lage des Fahrerkopfes relativ zur Umgebung mittels eines Head-Tracking-Systems erreicht.

Damit ist Projektion der virtuellen Fahrhinweise besonders genau nach der Sicht des Fahrers auf die Umgebung ausgerichtet. Es werden aber auch gute Resultate erzielt, wenn die Bilderzeugung mit einer geschätzen, fixen Position für den Fahrerkopf arbeitet.

Bei der umgebungsbezogenen Darstellung von Navigationshinweisen werden Objekte der Fahrzeugumgebung möglichst lagerichtig zu einem bestimmten Betrachtungswinkel - sei des der der Kamera oder der des Fahrers - virtuell mittels einer Projektionsfläche markiert. Also Objekte kommen dabei nicht nur Straßenverläufe in Frage, es ist auch denkbar, die Navigation an Gebäuden auszurichten oder Hinweise zu markanten Punkten oder speziellen *Points of Interest* (POI) zu geben. Letztere können beispielsweise speziell für den Beifahrer mit interessanten Informationen konnotiert werden. Die optische Bezugnahme auf diese Objekte erfolgt ebenso in einer Darstellung, die der Zuverlässigkeit der Positionsbestimmung Rechnung trägt.

Weitere Navigationshinweise betreffen beispielsweise Baustellen, Unfälle, Umleitungen oder Staus. Diese Informationen werden, wie die übrigen Umgebungsinformationen, der digitalen Karte entnommen, welche regelmäßig über eine Kommunikationsverbindung zu einer Dienstezentrale um diese Informationen aktualisiert und ergänzt wird.

Für eine möglichst gut interpretierbare Darstellung von Navigationshinweisen ist es von Nutzen, bestimmte Informationen, die das Navigationssystem hat, nicht anzuzeigen, um den Fahrer nicht abzulenken oder zu verwirren. Dazu gehören beispielsweise Streckenverläufe, die vom Fahrer nicht einsehbar sind, wie beispielsweise Kurven oder Tunnel oder Unterführungen. Deshalb ist es vorteilhaft, wenn das Bilderzeugungssystem Navigationshinweise, die sich auf - aus Sicht des Fahrers oder der Kamera - verdeckte Objekte beziehen, nicht - oder unterscheidbar anders, als Navigationshinweise die sich auf sichtbare Objekte beziehen - dargestellt werden. Dies kann vorteilhaft gewährleistet werden, wenn die Bilderzeugungseinheit vom Navigationssystem Informationen zur Unterscheidung von Objekten, die aus Sicht des Fahrers oder der Kamera verdeckt sind, von Objekten, die sichtbar sind, erhält.

Die verdeckten oder nicht einsehbaren Objekte können dann entweder ganz von der Darstellung ausgenommen werden, oder sie können beispielsweise strichliert oder in blasserer Schattierung angezeigt werden. Es können neben den Informationen auch der digitalen Karte auch weitere Informationen zur Ausblendung verdeckter Objekte herangezogen werden. Mit einem Distronic-Sensor kann beispielsweise der Abstand zu einem vorausfahrenden Fahrzeug berechnet werden, so dass eine virtuelle Fahrbahnmarkierung dann beispielsweise nur bis zu diesem Fahrzeug angezeigt wird.

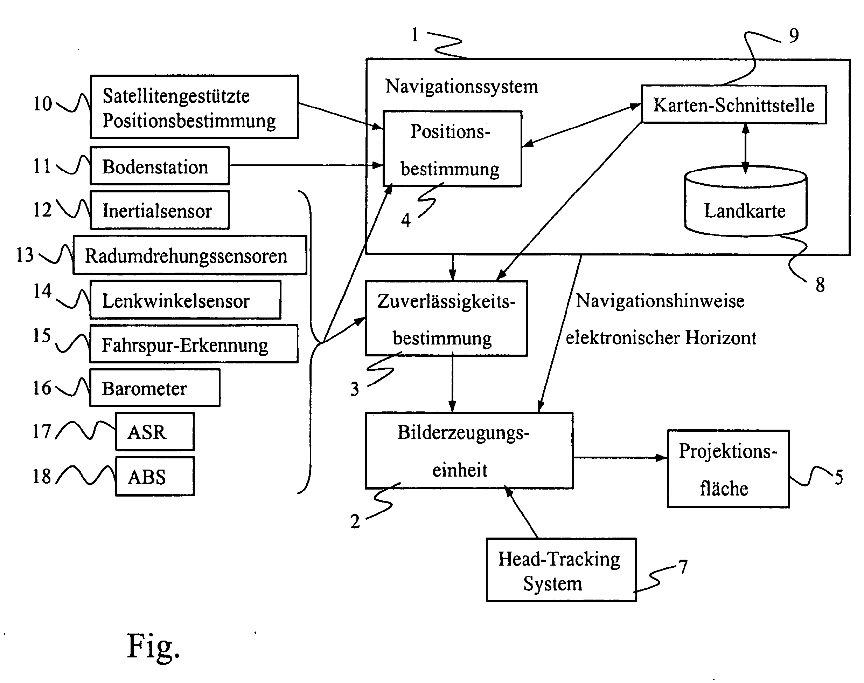

Die Erfindung wird nun anhand der Figur näher erläutert:

Die Figur zeigt ein bevorzugtes Ausführungsbeispiel mit einem Navigationssystem 1 zum Empfang von Positionsdaten von einem satellitengestützten System 10, die von der Einrichtung 4 zur Positionsbestimmung des Navigationssystems verarbeitet werden. Zusammen mit den Positionsdaten empfängt das Navigationssystem 1 Daten zur Genauigkeit dieser Positionsdaten. Diese Daten werden vom Navigationssystem zur weiteren Verarbeitung an die Einrichtung 3 zur Bestimmung der Zuverlässigkeit der Positionsbestimmung durchgereicht.

Von der Bodenstation 11 empfängt die Navigationseinrichtung 1 weiterhin Daten zur Korrektur der Positionsbestimmung, die von der Einrichtung 4 zur Positionsbestimmung verarbeitet werden, und Daten zur Zuverlässigkeit dieser Korrektur, die das Navigationssystem an die Einrichtung 3 zur Bestimmung der Zuverlässigkeit übermittelt.

Der Inertialsensor 12, der Lenkwinkelsensor 14, die Radumdrehungssensoren 13 - zusammen mit der Anti-Schlupf-Regelung 17 und dem Anti-Blockiersystem 18 -, die Fahrspur-Erkennung 15 und das Barometer 16 liefern der Einrichtung 4 zur Positionsbestimmung Signale zur weiteren Korrektur der Positionsangabe. Die gleichen Sensoren und System liefern der Einrichtung 3 zur Bestimmung der Zuverlässigkeit zur Zuverlässigkeit ihrer jeweiligen Beiträge zur Positionskorrektur, aus denen die Einrichtung 3 einen neuen Wert für die Zuverlässigkeit der Positionsangabe errechnet.

Die Einrichtung 4 zur Positionsbestimmung sendet die Positionsangabe an die Karten-Schnittstelle 9, die damit anahnd der digitalen Landkarte 8 einen Positionsabgleich durchführt (Lane-Matching). Die Karten-Schnittstelle 9 gibt die korrigierte Positionsangabe an die Einrichtung 4 zur Positionsbestimmung zurück und sendet einen Wert für die Korrektur der Zuverlässigkeit an die Einrichtung 3 zur Bestimmung der Zuverlässigkeit.

Mit der korrigierten Positionsangabe erzeugt die Karten-Schnittstelle aus der digitalen Landkarte 8 gemäß dem gewünschten Zielort weiterhin einen Navigationshinweis und alle für eine bildliche Darstellung des Navigationshinweises notwendigen Angaben und Umgebungsinformationen, die über eine Schnittstelle des Navigationssystems als sogenannter elektronischer Horizont an die Bilderzeugungseinheit 2 ausgegeben werden.

Die Bilderzeugungseinheit 2 erzeugt aus dem Navigationshinweis und dem elektronischen Horizont bildliche Darstellungen des Navigationshinweises, die sie auf eine Projektionsfläche 5 projiziert. Abhängig von der Zuverlässigkeit der ermittelten Positionsangaben unterscheidet die Bilderzeugungseinheit 2 zwischen umgebungsbezogenen und symbolischen Darstellungsformen. Die umgebungsbezogenen Darstellungen markieren dabei die auf der Projektionsfläche 5 wahrnehmbaren Objekte virtuell, wobei es darauf ankommt, das sich die auf die Projektionsfläche im Fahrzeug eingeblendeten Markierungen aus Sicht des Betrachters mit den draußen befindlichen Objekte treffen. Diese Darstellungsform wird daher erfindungsgemäß nur für sehr zuverlässige Positionsangaben eingesetzt, da hierfür die Übereinstimmung der realen Position des Fahrzeug mit der fiktiven Position auf der digitalen Karte entscheidend ist.

Die symbolische Darstellungsform bei geringer Zuverlässigkeit der Positionsbestimmung beschränkt sich auf ortsfeste Darstellungen von Hinweisen auf der Projektionsfläche. Bei einigermaßen ausreichender Genauigkeit der Positionsbestimmung und Eignung des Fahrhinweises können die symbolischen Darstellungen Objekten der Umgebung lose zugeordnet werden.

Die Projektionsfläche kann beispielsweise eine Windschutzscheibe sein, in welche die Navigationshinweise über ein Head-Up-Display eingespiegelt werden. Für eine genaue, lagerichtige Projektion dient ein Head-Tracking-System 7, das der Bilderzeugungseinheit 2 Angaben zu Position und Lage des Fahrerkopfes liefert.

## Patentansprüche

1. Verfahren zur Darstellung von Navigationshinweisen auf einer Projektionsfläche (5) in einem Fahrzeug, umfassend ein Navigationssystem (1), welches mittels eines satellitengestützten Systems (10) fortlaufend Positionsangaben für das Fahrzeug ermittelt, und welches mittels einer Bilderzeugungseinheit (2) die vom Navigationssystem (1) ermittelten Navigationshinweise erzeugt und in einem Bild der Fahrzeugumgebung auf der Projektionsfläche (5) darstellt,
**dadurch gekennzeichnet,**
**dass** eine Zuverlässigkeit für die Positionsangabe ermittelt wird, und die Bilderzeugungseinheit (2) die Navigationshinweise zuverlässigkeitsabhängig in unterschiedlicher Darstellung erzeugt.

2. Verfahren gemäß Anspruch 1,
**dadurch gekennzeichnet,**
**dass** die Zuverlässigkeit aus statistischen Werten, die das satellitengestützte System (10) zur Genauigkeit der ermittelten Position angibt, bestimmt wird.

3. Verfahren gemäß einem der Ansprüche 1 oder 2,
**dadurch gekennzeichnet,**
**dass** die Positionsangabe durch Korrekturdaten einer Bodenstation (11) präzisiert wird, und die Zuverlässigkeit mit Werten für die Zuverlässigkeit dieser Präzisierungen korrigiert wird.

4. Verfahren gemäß einem der Ansprüche 1 bis 3,
**dadurch gekennzeichnet,**
**dass** die Positionsangabe durch fahrzeugseitig erhobene Signale präzisiert wird, und die Zuverlässigkeit mit Werten für die Zuverlässigkeit dieser Präzisierungen korrigiert wird.

5. Verfahren gemäß Anspruch 4,
**dadurch gekennzeichnet,**
**dass** als fahrzeugseitig erhobene Signale Beschleunigung und/oder eine relative Höhenänderung und/oder das Resultat einer Fahrspurerkennung verwendet werden.

6. Verfahren gemäß einem der Ansprüche 1 bis 5,
**dadurch gekennzeichnet,**
**dass** die Bilderzeugungseinheit (2) die zuverlässigkeitsabhängige Darstellung der Navigationshinweise
- bei einer hohen Zuverlässigkeit umgebungsbezogen,
- bei einer geringen Zuverlässigkeit symbolisch und
- bei einer mittleren Zuverlässigkeit in Abhängigkeit vom darzustellenden Navigationshinweis entweder umgebungsbezogen oder symbolisch
erzeugt.

7. Verfahren gemäß Anspruch 6,
**dadurch gekennzeichnet,**
**dass** bei der umgebungsbezogenen Darstellung die Navigationshinweise lagerichtig zur Sicht des Fahrers oder zum Blickwinkel einer Kamera (6) auf geeignete Objekte im Bild der Fahrzeugumgebung projiziert werden.

8. Verfahren gemäß einem der Ansprüche 6 oder 7,
**dadurch gekennzeichnet,**
**dass** Navigationshinweise, die sich auf - aus Sicht des Fahrers oder der Kamera (6) - verdeckte Objekte beziehen, nicht - oder unterscheidbar anders, als Navigationshinweise, die sich auf sichtbare Objekte beziehen - dargestellt werden.

9. Vorrichtung zur Darstellung von Navigationshinweisen auf einer Projektionsfläche (5) in einem Fahrzeug, umfassend ein Navigationssystem (1) zur fortlaufenden Ermittlung einer Positionsangabe für das Fahrzeug mittels eines satellitengestützten Systems (10) und einer Bilderzeugungseinheit (2) zur Erzeugung der vom Navigationssystem ermittelten Navigationshinweise und Darstellung in einem Bild der Fahrzeugumgebung auf der Projektionsfläche (5),
**dadurch gekennzeichnet,**
**dass** eine Einrichtung zur Bestimmung der Zuverlässigkeit der Positionsangabe (3) vorhanden ist, die mit der Bilderzeugungseinheit (2) zur zuverlässigkeitsabhängigen Erzeugung unterschiedlicher Darstellungen für die Navigationshinweise verbunden ist.

10. Vorrichtung gemäß Anspruch 9,
**dadurch gekennzeichnet,**
**dass** die Einrichtung zur Bestimmung der Zuverlässigkeit (3) über das Navigationssystem mit dem satellitengestützten System (10) zum Empfang von Daten, die Genauigkeit der Positionsangabe betreffend, in Kommunikationsverbindung steht.

11. Vorrichtung gemäß einem der Ansprüche 9 oder 10,
**dadurch gekennzeichnet,**
**dass** eine Bodenstation (11) mit der Einrichtung zur Ermittlung der Positionsangabe (4) zum Empfang von Daten zur Korrektur der Positionsangabe und über das Navigationssystem mit der Einrichtung zur Bestimmung der Zuverlässigkeit (3) zum Empfang von Daten zur Korrektur der Zuverlässigkeit in Kommunikationsverbindung steht.

12. Vorrichtung gemäß einem der Ansprüche 9 bis 11,
**dadurch gekennzeichnet,**
**dass** fahrzeugseitige Sensoren mit der Einrichtung zur Ermittlung der Positionsangabe (4) zum Empfang von Daten zur Korrektur der Positionsangabe und mit der Einrichtung zur Bestimmung der Zuverlässigkeit (3) zum Empfang von Daten zur Korrektur der Zuverlässigkeit in Kommunikationsverbindung stehen.

13. Vorrichtung gemäß Anspruch 12,
**dadurch gekennzeichnet,**
**dass** als fahrzeugseitige Sensoren ein Inertialsensor (12) und/oder Radumdrehungssensoren (13) in Kombination mit einem Lenkwinkelsensor (14) und/oder ein Barometer (16) und/oder eine video-gestützte Fahrspurerkennung (15) vorgesehen sind.

14. Vorrichtung gemäß einem der Ansprüche 9 bis 13,
**dadurch gekennzeichnet,**
**dass** die Darstellung der mittels der Bilderzeugungseinrichtung (2) erzeugten Navigationshinweise zuverlässigkeitsabhängig
- bei einer hohen Zuverlässigkeit umgebungsbezogen,
- bei einer geringen Zuverlässigkeit symbolisch und
- bei einer mittleren Zuverlässigkeit in Abhängigkeit vom darzustellenden Navigationshinweis entweder umgebungsbezogen oder symbolisch
ist.

15. Vorrichtung gemäß einem der Ansprüche 9 bis 14,
**dadurch gekennzeichnet,**
**dass** die Projektionsfläche (5) ein Display ist, auf dem das durch eine Kamera (6) aufgenommene Bild der Fahrzeugumgebung wiedergegeben wird, in welches die durch die Bilderzeugungseinheit (2) erzeugten Darstellungen der Navigationshinweise einblendbar sind.

16. Vorrichtung gemäß Anspruch 15,
**dadurch gekennzeichnet,**
**dass** bei der umgebungsbezogenen Darstellung die Navigationshinweise durch Bestimmung der relativen Lage der Kamera (6) zur Umgebung mittels eines Inertialsensors (12) lagerichtig auf geeignete Objekte der Fahrzeugumgebung projizierbar sind.

17. Vorrichtung gemäß einem der Ansprüche 9 bis 14,
**dadurch gekennzeichnet,**
**dass** die Projektionsfläche eine halbdurchlässige Datenbrille oder die Windschutzscheibe in Verbindung mit einem Head-Up-Display ist, in das die durch die Bilderzeugungseinheit (2) erzeugten Navigationshinweise einblendbar sind.

18. Vorrichtung gemäß Anspruch 17,
**dadurch gekennzeichnet,**
**dass** bei der umgebungsbezogenen Darstellung die Navigationshinweise durch Bestimmung von Position und Lage des Fahrerkopfes relativ zur Umgebung mittels eines Head-Tracking-Systems (7) lagerichtig auf geeignete Objekte der Fahrzeugumgebung projizierbar sind.

19. Vorrichtung gemäß einem der Ansprüche 14 bis 17,
**dadurch gekennzeichnet,**
**dass** die Bilderzeugungseinheit (2) vom Navigationssystem (1) Informationen zur Unterscheidung von Objekten, die aus Sicht des Fahrers oder der Kamera (6) verdeckt sind, von Objekten, die sichtbar sind, erhält.

## Claims

1. Method for displaying navigation instructions on a projection surface (5) in a vehicle, comprising a navigation system (1) which continually detects position information for the vehicle by means of a satellite-based system (10) and which, by means of an image generating unit (2), generates the navigation instructions determined by the navigation system (1) and displays them in an image of the vehicle environment on the projection surface (5),
**characterised in that**
a reliability for the position information is determined and **in that** the image generating unit (2) generates the navigation instructions in varying presentation in dependence on their reliability.

2. Method according to claim 2,
**characterised in that**
the reliability is determined from statistical values specified by the satellite-based system (10) for the accuracy of the detected position.

3. Method according to claim 1 or 2,
**characterised in that**
the position information is made more precise by correction data of a ground station (11), and **in that** the reliability is corrected using values for the reliability of these precisations.

4. Method according to any of claims 1 to 3,
**characterised in that**
the position information is made more precise by signals raised from the vehicle, and **in that** the reliability is corrected using values for the reliability of these precisations.

5. Method according to claim 4,
**characterised in that**
acceleration and/or a relative height change and/or the result of a lane detection is/are used as signals raised from the vehicle.

6. Method according to any of claims 1 to 5,
**characterised in that**
the image generating unit (2) generates the reliability-dependent display of the navigation instructions
- at high reliability with reference to the environment,
- at low reliability symbolically and
- at medium reliability in dependence on the navigation instruction to be displayed either with reference to the environment or symbolically.

7. Method according to claim 6,
**characterised in that**
in the display with reference to the environment, the navigation instructions are projected in the correct position relative to the view of the driver or relative to the viewing angle of a camera (6) on suitable objects in the image of the vehicle environment.

8. Method according to claim 6 or 7,
**characterised in that**
navigation instructions which are related to objects which are hidden - from the view of the driver or of the camera (6) - are displayed either not at all - or in a distinctly different way from navigation instructions related to visible objects.

9. Device for displaying navigation instructions on a projection surface (5) in a vehicle, comprising a navigation system (1) which continually detects position information for the vehicle by means of a satellite-based system (10) and an image generating unit (2) for generating the navigation instructions determined by the navigation system and for the display of an image of the vehicle environment on the projection surface (5),
**characterised in that**
a device is provided for the determination of the reliability of the position information (3), which is connected to the image generating unit (2) for the reliability-dependent generation of different displays for the navigation instructions.

10. Device according to claim 9,
**characterised in that**
the device for the determination of the reliability (3) is connected for communication to the satellite-based system (10) for receiving data related to the accuracy of the position information via the navigation system.

11. Device according to claim 9 or 10.
**characterised in that**
a ground station (11) is connected for communication to the device for the determination of the position information (4) for receiving data for the correction of the position indication and, via the navigation system, to the device for the determination of the reliability (3) for receiving data for the correction of the reliability.

12. Device according to any of claims 9 to 11,
**characterised in that**
vehicle-mounted sensors are connected for communication to the device for the determination of the position information (4) for receiving data for the correction of the position information and to the device for the determination of the reliability (3) for receiving data for the correction of the reliability.

13. Device according to claim 12,
**characterised in that**
an inertial sensor (12) and/or wheel revolution sensors (13) in combination with a steering angle sensor (14) and/or a barometer (16) and/or a video-based lane detection device (15) is/are provided as vehicle-mounted sensors.

14. Device according to any of claims 9 to 13,
**characterised in that**
the navigation instructions generated by means of the image generating unit (2) are displayed in a reliability-dependent manner
- at high reliability with reference to the environment,
- at low reliability symbolically and
- at medium reliability in dependence on the navigation instruction to be displayed either with reference to the environment or symbolically.

15. Device according to any of claims 9 to 14,
**characterised in that**
the projection surface (5) is a display on which an image of the vehicle environment taken bye a camera (6), into which the displays of the navigation instructions generated by the image generating unit (2) can be inverted, is reproduced.

16. Device according to claim 15,
**characterised in that**
in the environment-related display, the navigation instructions can be projected in the correct position onto suitable objects of the vehicle environment by determining the position of the camera (6) relative to the environment by means of an inertial sensor (12).

17. Device according to any of claims 9 to 14,
**characterised in that**
the projection surface is a semi-transparent data panel or the windscreen in combination with a head-up display into which the navigation instructions generated by the image generating unit (2) can be inserted.

18. Device according to claim 17
**characterised in that**
in the environment-related display, the navigation instructions can be projected onto suitable objects of the vehicle environment in the correct position by determining the position and orientation of the driver's head relative to the environment by means of a head tracking system (7).

19. Device according to any of claims 14 to 17,
**characterised in that**
the image generating unit (2) receives information from the navigation system (1) for distinguishing between objects which are concealed from the view of the driver or from the camera (6) and objects which are visible.

## Revendications

1. Procédé de représentation d'indications de navigation sur une surface (5) de projection dans un véhicule, comprenant un système (1)de navigation qui déterminé en permanence au moyen d'un système (10) assisté par satellite des indications de position du véhicule et génère au moyen d'un dispositif générateur (2) d'images les indications de navigation déterminées par le système de navigation (1) et les représente dans une image de l'environnement du véhicule sur une surface de protection (5), **caractérisé en ce qu'**une fiabilité pour l'indication de position est établie et le dispositif (2) générateur d'images génère les indications de navigation dans une représentation différente en fonction de la fiabilité.

2. Procédé selon la revendication 1, **caractérisé en ce que** la fiabilité est déterminée par des valeurs statistiques indiquées par le système (10) assisté par satellite pour préciser la position détectée.

3. Procédé selon l'une quelconque des revendications 1 ou 2, **caractérisé en ce que** l'indication de position est précisée par des données de correction délivrée par une station (11) au sol et la fiabilité est corrigée au moyen de valeurs pour la fiabilité pour ces précisions.

4. Procédé selon l'une quelconque des revendications 1 à 3, **caractérisé en ce que** l'indication de position est précisée par des signaux recueillis côté véhiculé et la fiabilité est corrigée art moyen de valeurs pour la fiabilité de ces précisions.

5. Procédé selon la revendication 4, **caractérisé en ce qu'**une accélération et / au un changement relatif de hauteur et / ou le résultat d'une identification de la voie de circulation sont utilisés en tant que signaux recueillis coté véhicule.

6. Procédé selon l'une quelconque des revendications 1 à 5, **caractérisé en ce que** le dispositif (2) générateur d'images génère la représentation des indications de navigation en fonction de la fiabilité
- par rapport à l'environnement lorsque la fiabilité est élevée,
- de manière symbolique lorsque la fiabilité est faible et
- soit par rapport à l'environnement soit de manière symbolique en fonction de l'indication de navigation devant être représentée lorsque la fiabilité est moyenne.

7. Procédé selon la revendication 6, **caractérisé en ce qu'**en présence d'une représentation par rapport à l'environnement, les indications de navigation sont projetées en position correcte dans le champ de vision du conducteur ou dans l'angle de visée d'une caméra (6) sur des objets adéquats dans l'image de l'environnement du véhicule.

8. Procédé selon l'une quelconque des revendications 6 ou 7, **caractérisé en ce que** les indications de navigation, qui se référent - d'un point de vue du conducteur ou de la caméra (6) - à des objets dissimulés, ne sont pas représentés ou sont représentés de manière différente que les indications de navigation qui font référence à des objets visibles.

9. Dispositif de représentation d'indications de navigation sur une surface (5) de projection dans un véhicule, comprenant un système (1) de navigation destiné à déterminer en permanence une indication de position pour le véhicule au moyen d'un système (10) assisté par satellite et d'un dispositif (2) générateur d'images qui génère des indications de navigation déterminées par le système de navigation et qui les représente sur une image de l'environnement du véhicule sur la surface (5) de projection, **caractérisé en ce qu'**est prévu un dispositif (3) pour déterminer la fiabilité de l'indication de position qui est relié au dispositif (2) générateur d'images afin de générer différentes représentations des indications de navigation en fonction de la fiabilité.

10. Dispositif selon la revendication 9, **caractérisé en ce que** le dispositif (3) pour déterminer la fiabilité est en liaison de communication avec le système (10) assisté par satellite par l'intermédiaire du système de navigation pour recevoir des données relatives à la précision de l'indication de position.

11. Dispositif selon l'une quelconque des revendications 9 ou 10, **caractérisé en ce qu'**une station (11) au sol est en liaison de communication avec le dispositif (4) pour déterminer l'indication de position pour recueillir des données servant à corriger l'indication de position et avec le dispositif (3) pour déterminer la fiabilité par l'intermédiaire du système de navigation pour recueillir des données servant à corriger la fiabilité.

12. Dispositif selon l'une quelconque des revendications 9 à 11, **caractérisé en ce que** des capteurs côté véhicule sont en liaison de communication avec le dispositif (4) pour détecter l'indication de position pour recueillir des données servant à corriger l'indication de position et avec le dispositif (3) pour déterminer la fiabilité pour recueillir des données servant à corriger la fiabilité.

13. Dispositif selon la revendication 12, **caractérisé en ce qu'**en tant que capteurs côté véhicule sont prévus un capteur (12) inertiel et / ou des capteurs (13) de rotation de roue associés un capteur (14) d'angle de braquage et / ou un baromètre (16) et / ou un dispositif (15) d'identification de voie de circulation assisté par vidéo.

14. Dispositif selon l'une quelconque des revendications 9 à 13, **caractérisé en ce que** la représentation des indications de navigation générées au moyen du dispositif (2) générateur d'images est réalisée en fonction de la fiabilité
- par rapport à l'environnement lorsque la fiabilité est élevée,
- de manière symbolique lorsque la fiabilité est faible et
- soit par rapport à l'environnement soit de manière symbolique en fonction de l'indication de navigation devant être représentée lorsque la fiabilité est moyenne.

15. Dispositif selon l'une quelconque des revendications 9 à 14, **caractérisé en ce que** la surface (5) de projection est un écran sur lequel l'image de l'environnement du véhicule enregistrée par une caméra (6) est reproduite, et sur lequel peuvent être affichées les représentations des indications de navigation générées par le dispositif (2) générateur d'images.

16. Dispositif selon la revendication 15, **caractérisé en ce qu'**en présence d'une représentation par rapport à l'environnement, les indications de navigation peuvent être projetées dans la position correcte sur des objets adéquats de l'environnement du véhicule grâce à la détermination de la position relative de la caméra (6) par rapport à l'environnement au moyen d'un capteur inertiel (12).

17. Dispositif selon l'une quelconque des revendications 9 à 14, **caractérisé en ce que** la surface de projection est une paire de lunettes de données semi-transparente ou le pare-brise associé à un écran à affichage à tête haute, sur lequel les indications de navigation générées par le dispositif (2) générateur d'images peuvent s'afficher.

18. Dispositif selon la revendication 17, **caractérisé en ce qu'**en présence d'une représentation par rapport à l'environnement, les indications de navigation peuvent être projetées dans la position correcte sur des objets adéquats de l'environnement du véhicule grâce à la détermination de la position et de la situation de la tête du conducteur par rapport à l'environnement au moyen d'un système (7) de localisation de tête.

19. Dispositif selon l'une quelconque des revendications 14 à 17, **caractérisé en ce que** le dispositif (2) générateur d'images du système (1) de navigation reçoit des informations relatives à la distinction entre des objets qui sont dissimulés d'un point de vue du conducteur ou de la caméra (6) et des objets qui sont visibles.
